(19) **Europäisches Patentamt**
**European Patent Office**
**Office européen des brevets**

(11) Veröffentlichungsnummer: **0 048 392 B2**

(12) # NEUE EUROPÄISCHE PATENTSCHRIFT

(45) Veröffentlichungstag der neuen Patentschrift:
27.12.91 Patentblatt 91/52

(51) Int. Cl.⁵: **C08L 25/00, C08L 71/12**

(21) Anmeldenummer: **81107093.7**

(22) Anmeldetag: **09.09.81**

(54) **Thermoplastische Formmassen.**

Die Akte enthält technische Angaben, die nach dem Eingang der Anmeldung eingereicht wurden und die nicht in dieser Patentschrift enthalten sind.

(30) Priorität: **20.09.80 DE 3035569**

(43) Veröffentlichungstag der Anmeldung:
**31.03.82 Patentblatt 82/13**

(45) Bekanntmachung des Hinweises auf die Patenterteilung:
**06.02.85 Patentblatt 85/06**

(45) Bekanntmachung des Hinweises auf die Entscheidung über den Einspruch:
**27.12.91 Patentblatt 91/52**

(84) Benannte Vertragsstaaten:
**BE DE FR GB NL**

(56) Entgegenhaltungen:
**DE-C- 2 119 301**
**DE-C- 2 211 005**
**FR-A- 2 090 643**

(56) Entgegenhaltungen:
**FR-A- 2 134 399**
**FR-A- 2 162 154**
**FR-A- 2 197 042**
**FR-A- 2 212 378**
**FR-A- 2 337 173**
**US-A- 4 128 602**
**Saechtling Kunststoff-Taschenbuch, 21. Ausgabe, 1979, S.233**
**Journal of Material Science 9, 1443-1453 (1972)**

(73) Patentinhaber: **BASF Aktiengesellschaft**
**Carl-Bosch-Strasse 38**
**W-6700 Ludwigshafen (DE)**

(72) Erfinder: **Brandstetter, Franz, Dr.**
**Ritterbuechel 45**
**W-6730 Neustadt (DE)**
Erfinder: **Echte, Adolf, Dr.**
**Leuschnerstrasse 42**
**W-6700 Ludwigshafen (DE)**
Erfinder: **Mittnacht, Hans, Dr.**
**Zinkgraefstrasse 44**
**W-6940 Weinheim (DE)**
Erfinder: **Naarmann, Herbert, Dr.**
**Haardtblick 15**
**W-6719 Wattenheim (DE)**

EP 0 048 392 B2

Jouve, 18, rue Saint-Denis, 75001 PARIS

EP 0 048 392 B2

## Beschreibung

Die Erfindung betrifft thermoplastische Formmassen auf der Grundlage von schlagfest modifizierten Styrolpolymerisaten und Polyphenylenäthern.

Thermoplastische Massen, die sich zur Herstellung von Formteilen eignen und die schlagzäh modifizierte Styrolpolymerisate und Polyphenylenäther enthalten sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenäthern abgemischt sind, durch eine bessere Wärmeformbeständigkeit auszeichnen. Die Materialeigenschaften derartiger Formmassen sind im allgemeinen zufriedenstellend, doch hat es sich gezeigt, dass Formteile eine nicht ausreichende Spannungsrissbeständigkeit haben.

Der vorliegenden Erfindung lag daher die Aufgabe zugrunde, thermoplastische Formmassen auf der Grundlage von schlagfest modifizierten Styrolpolymerisaten und Polyphenylenäthern zu schaffen, die zu Formteilen mit einer verbesserten Spannungsrissbeständigkeit verarbeitet werden können.

Diese Aufgabe wird erfindungsgemäß gelöst durch thermoplastische Formmassen auf der Grundlage von schlagfest modifizierten Styrolpolymerisaten, deren Weichkomponentengehalt mindestens 20 Gew.-% beträgt, und Polyphenylenäthern und die Formmassen Mischungen aus zwei modifizierten Styrolpolymerisaten enthalten, wobei die Weichkomponente eines Styrolpolymerisates einen mittleren Teilchendurchmesser von 4 bis 10 μm hat und die Teilchen 85 bis 95 Gew.-% der Teilchen der Weichkomponenten der Mischung ausmachen und die Weichkomponente des anderen Styrolpolymerisates einen mittleren Teilchendurchmesser von 0,6 bis 3 μm hat und die Teilchen 5 bis 15 Gew.-% der Teilchen der Weichkomponenten der Mischung ausmachen.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die in den erfindungsgemässen Formmassen enthaltenen Styrolpolymerisate können beispielsweise durch Mischen von 90 Gew.-Teilen eines Polymerisates mit einer mittleren Teilchengrösse von 6 μm mit 10 Gew.-Teilen eines Polymerisates mit einer mittleren Teilchengrösse von 1 μm erhalten werden.

Besonders geeignet sind solche thermoplastische Formmassen, in denen 85 bis 95 Gew.% der Teilchen einen Teilchendurchmesser von 5 bis 7 μm und 5 bis 15 Gew.% der Teilchen einen Durchmesser von 0,6 bis 3 μm haben.

Die thermoplastischen Formmassen können schlagfest modifizierte Styrolpolymerisate und Polyphenylenäthern in beliebigen Mengen, beispielsweise in Mengen von 5 bis 90 Gew.% Styrolpolymerisat und 95 bis 10 Gew.% Polyphenylenäther enthalten. Für die Herstellung von Formteilen eignen sich insbesondere solche Formmassen, die 20 bis 80 Gew.% schlagfest modifizierte Styrolpolymerisate und 80 bis 20 Gew.% Polyphenylenäther enthalten.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrössenkombination eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate, des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt der zwischen 25 und 98 liegt.

Die Herstellung der schlagfest modifizierten Polymerisate mit dem erfindungsgemässen Eigenschaftsbild geschieht durch Polymerisation der monovinylaromatischen Verbindungen in Gegenwart des Kautschuks. Die Polymerisation erfolgt, wie erwähnt, dabei in der Regel in an sich bekannter Weise in Masse, Lösung oder wässriger Dispersion, wobei zunächst der Kautschuk in den polymerisierbaren Monomeren gelöst und diese Ausgangslösung polymerisiert wird.

Bei der Lösungs-Polymerisation können dieser Ausgangslösung noch bis zu maximal 50 Gewichtsprozent, bezogen auf die eingesetzten monovinylaromatischen Verbindungen, eines indifferenten Verdünnungsmittels zugesetzt werden. Als indifferente Verdünnungsmittel sind beispielsweise aromatische Kohlenwasserstoffe oder Gemische von aromatischen Kohlenwasserstoffen geeignet. Bevorzugt werden dabei Toluol, Äthylbenzol, die Xylole oder Gemische dieser Verbindungen.

2

Bei der Polymerisation in wässriger Dispersion wird im allgemeinen auf den Zusatz von Lösungsmitteln verzichtet; eine besonders günstige Ausführungsform besteht darin, die Lösung des Kautschuks in den Monomeren bis zu einem Um satz von etwa 30% in Masse unter Einwirkung von Scherkräften vorzupolymerisieren, diese Reaktionsmasse dann in Wasser zu suspendieren und anschliessend auszupolymerisieren. Im allgemeinen wird dieses Verfahren unter Zugabe öllöslicher, in Radikale zerfallender Initiatoren wie Benzoylperoxid, Dicumylperoxid, Di-tert.-butylperoxid, Azo-diisobutyronitril u.ä. oder Kombinationen davon ausgelöst, doch kann die Vorpolymerisation auch thermisch gestartet werden. Als Suspendiermittel dienen bekanntlich wasserlösliche, hochmolekulare Verbindungen wie Methylcellulose, Oxypropylcellulose, Polyvinylalkohol, teilverseifte Polyvinylacetate usw. oder anorganische Dispergiermittel, z.B. von Bariumsulfat. Die Suspendiermittel werden im allgemeinen in Mengen von 0,1 bis 5 Gew.%, bezogen auf die organische Phase eingesetzt.

Bei der Polymerisation in Masse oder Lösung wird in der Regel in einem Temperaturbereich zwischen 50 und 250°C, vorzugsweise 100 bis 200°C, polymerisiert. Der Polymerisationsansatz muss dabei mindestens im ersten Abschnitt der Polymerisation, d.h. bis zu Umsätzen der monovinylaromatischen Verbindungen gleich oder kleiner 35 Gew.% gut gerührt werden. Alle diese Polymerisationsverfahren sind hinreichend bekannt und in Einzelheiten in der Literatur beschrieben. Eine zusammenfassende Darstellung findet sich bei Amos, Polym. Engng. Sci., 14 (1974), 1, S. 1 bis 11, sowie in den US-Patentschriften 2 694 692 und 2 862 906 auf die wegen weiterer Einzelheiten verwiesen werden soll.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die Weichkomponente ist im allgemeinen heterogen aufgebaut; sie bildet sich in der Regel im Laufe des Herstellprozesses aus und wird in der Menge und im Zerteilungsgrad durch die Verfahrensbedingungen beeinflusst. Die zu polymerisierende Lösung des Kautschuks in den monovinylaromatischen Monomeren trennt sich bekanntlich unmittelbar nach Einsetzen der Reaktion in zwei Phasen, von denen die eine, eine Lösung des Kautschuks im monomeren Vinylaromaten, zunächst die kohärente Phase bildet, während die zweite, eine Lösung des Polyvinylaromaten in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf. Bei diesem bilden sich Tropfen von Kautschuklösung in Polyvinylaromatlösung aus; diese Tropfen halten aber ihrerseits kleinere Tropfen der jetzt äusseren Phase eingeschlossen.

Neben diesem Vorgang läuft eine Pfropfreaktion ab, bei der chemische Verknüpfungen zwischen den Kautschukmolekülen und den Polyvinylaromaten unter Bildung von Pfropf-Copolymeren aus beiden Bestandteilen gebildet werden. Dieser Vorgang ist bekannt und z.B. bei Fischer, Die angew. Makrom. Chem. 33 (1973), S. 35 bis 74, ausführlich dargestellt.

Sowohl der aufgepfropfte als auch der mechanisch eingeschlossene Anteil des Polyvinylaromaten in den Kautschukteilchen ist zur Weichkomponente zu rechnen.

Wenn die Masse ganz durchpolymerisiert ist, ist so eine in eine harte Matrix aus dem Polyvinylaromaten eingelagerte heterogene Weichkomponente entstanden, die aus gepfropften Kautschukteilchen mit Einschlüssen aus Matrixmaterial (Polyvinylaromat) besteht. Je grösser die Menge des eingeschlossenen Matrix-Materials ist, um so grösser ist bei konstantem Kautschukgehalt die Menge der Weichkomponente.

Diese richtet sich also nicht nur nach der Menge des eingesetzten Kautschuks, sondern auch nach der Prozessführung besonders vor und während der Phaseninversion. Die Einzelmassnahmen sind prozeßspezifisch und dem Fachmann bekannt [siehe z.B. Freeguard, Brit. Polym. J. 6 (1974) S. 203 bis 228; Wagner, Robeson, Rubber Chem. Techn. 43 (1970), 1129 ff].

Um zu schlagfesten thermoplastischen Formmassen mit den erfindungsgemässen Eigenschaftsmerkmalen zu gelangen, wird die Menge an Kautschuk, die vor der Polymerisation in den Monomeren unter Herstellung der Ausgangslösung gelöst wird, in Abhängigkeit von dem Endumsatz bei der Polymerisation so gewählt, dass der Weichkomponentengehalt im resultierenden schlagfest modifizierten Polymerisat der monovinylaromatischen Verbindungen mindestens 20 Gew.%, vorzugsweise 25 Gew.% und mehr, bezogen auf das schlagfest modifizierte Polymerisat, beträgt. Die Obergrenze des Weichkomponentengehaltes ist durch die Forderung, dass der Polyvinylaromat die kohärente Phase bilden muss zu etwa 50 bis 60 Gew.% gegeben. Für die erfindungsgemässen thermoplastischen Formmassen hat sich dabei ein Weichkomponenten-Gehalt von 25 bis 35 Gewichtsprozent, bezogen auf das schlagfest modifizierte Polymerisat, als besonders günstig erwiesen. Der Kautschuk-Anteil des schlagfest modifizierten Polymerisats beträgt dann im allgemeinen zwischen 2 und 15 Gew.%, vorzugsweise von 5 bis 12 Gew.%.

Wie dargelegt und hinreichend bekannt, bestehen die schlagfest modifizierten Polymerisate der monovinylaromatischen Verbindungen aus einer einheitlichen umhüllenden Phase (Matrix) aus dem Polymerisat der monovinylaromatischen Verbindung, in die als disperse Phase die Kautschukteilchen der Weichkomponente eingebettet sind, wobei die Kautschuk-Teilchen partiell vernetzt und in mehr oder weniger starkem Masse während der Polymerisation durch die monovinylaromatischen Verbindungen gepfropft worden sind.

Die Bestimmung der mittleren Teilchengrösse der dispersen Weichkomponente kann z.B. durch Auszählung und Auswertung elektronenmikroskopischer Dünnschichtaufnahmen der schlagfest modifizierten Polymerisate erfolgen [vgl. F. Lenz, Zeitschrift für Wiss. Mikroskopie, 63 (1956), S. 50/ 56].

Die Einstellung der Teilchengrösse der dispersen Weichkomponenten-Phase erfolgt dabei in an sich bekannter Weise bei der Polymerisation der monovinylaromatischen Verbindungen durch Anpassen der Rührgeschwindigkeit im ersten Abschnitt der Polymerisation, d.h. bis zu einem Umsatz der Monomeren von gleich oder kleiner als 35%. Dabei ist die Teilchengrösse der dispersen Weichkomponenten-Phase um so grösser, je kleiner die Rührerdrehzahl und damit je kleiner die Scherbeanspruchung ist. Der Zusammenhang zwischen der Rührgeschwindigkeit und der Grösse und Verteilung der Kautschukteilchen im resultierenden schlagfesten Polymerisat ist z.B. in der zitierten Arbeit von Freeguard beschrieben, auf welche hinsichtlich weiterer Einzelheiten verwiesen wird. Die betreffende notwendige Rührgeschwindigkeit zur Erzielung der gewünschten Teilchengrösse der dispersen Weichkomponenten-Phase hängt unter anderem von den jeweiligen Apparateverhältnissen ab und ist dem Fachmann bekannt bzw. lässt sich durch ein paar einfache Versuche bestimmen.

Die mittlere Teilchengrösse (Gewichtsmittel) der dispersen Weichkomponenten-Phase wurde bestimmt durch Auszählen und Mitteln der zur gleichen Grössenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50%-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Bei den Polyäthern handelt es sich um Verbindungen auf der Basis von in ortho-Position disubstituierten Polyphenylenoxiden, wobei der Äthersauerstoff der einen Einheit an den Benzolkern der benachbarten Einheit gebunden ist. Dabei sollen mindestens 50 Einheiten miteinander verknüpft sein. Die Polyäther können in ortho-Stellung zum Sauerstoff Wasserstoff, Halogen, Kohlenwasserstoffe, die kein $\alpha$-ständiges tert. Wasserstofatom besitzen, Halogenkohlenwasserstoffe, Phenylreste und Kohlenwasserstoff-oxi-Reste tragen. So kommen in Frage: Poly(2,6-dichlor-1,4-phenylen)äther, Poly(2,6-diphenyl-1,4-phenylen)äther, Poly(2,6-dimethoxy-1,4-phenylen)äther, Poly(2,6-dimethyl-1,4-phenylen)äther, Poly(2,6-dibrom-1,4-phenylen)äther. Bevorzugterweise wird der Poly(2,6-dimethyl-1,4-phenylen)äther eingesetzt. Besonders bevorzugt werden Poly-(2,6-dimethyl-1,4-phenylen)äther mit einer Grenzviskosität zwischen 0,45 und 0,65 dl/g (gemessen in Chloroform bei 30°C).

Die Polyphenylenäther können z.B. in Gegenwart von komplexbildenden Mitteln wie Kupferbromid und sek.-Dibutylamin aus den Phenolen hergestellt werden.

Die Mischungen aus den schlagzäh modifizierten Styrolpolymerisaten und Polyphenylenäthern können ausserdem weitere Zusatzstoffe wie Pigmente, Farbstoffe, Füllstofe, Flammschutzmittel, weitere verträgliche Polymere, Antistatika, Antioxidantien und Schmiermittel enthalten.

Man stellt die erfindungsgemässen thermoplastischen Formmassen wie üblich auf Vorrichtungen, die ein homogenes Mischen zulassen, wie Knetern, Extrudern oder Walzenmischgeräten her. Neben der hohen Spannungsrissbeständigkeit haben die Formmassen weitere gute Eigenschaften, wie hohe Wärmeformbeständigkeit und hohe Zähigkeit.

Beispiele und Vergleichsversuche

Ein schlagfestes Polystyrol mit einer mittleren Teilchengrösse von 1 µm wurde nach folgender Rezeptur hergestellt:

In einer 2-Kessel-2-Turmkaskade wurde eine Mischung von 7,2 Gew.-Teile eines Polybutadiens mit einem cis-Anteil von 98%, zusammen mit 85,7 Gew.-Teilen Styrol, 6 Gew.-Teilen Äthylbenzol und 0,1 Gew.-Teilen Octadecyl-3-(3′,5′-di-tert.-butyl-4′-hydroxiphenyl)-propionat thermisch polymerisiert. Der Durchsatz betrug 4 l/Stunde. Die in den einzelnen Reaktoren angewendeten Rührgeschwindigkeiten, Temperaturen sowie die eingestellten integralen Umsätze sind unten aufgeführt. In den dritten Reaktor wurden dem Polymerstrom 0,02 Gew.% tert.-Dodecylmercaptan, bezogen auf Styrol, kontinuierlich zudosiert. Die Polymerisatmischung wurde nach der Polymerisation in einer Entgasungszone bei 220 bis 240°C vom Lösungsmittel und Restmonomeren befreit.

| Ort | Rührgeschwin-digkeit (Upm) | Temp. (°C) | Umsatz (Integral) |
|---|---|---|---|
| 1. Rührreaktor | 100 | 104 | 3,8 |
| 2. Rührreaktor | 160 | 132 | 20,3 |
| 1. Turm | 15 | 101 | 55,3 |
| 2. Turm | 3 | 127 | 84,3 |
| Entgasung | – | 250 | – |

Nach folgender Vorschrift wird ein schalgfestes Polystyrol mit einer mittleren Teilchengrösse von 5 bis 7 μm hergestellt.

In einem 4 l-Rührkessel mit Blattrührer wurde eine Lösung bestehend aus

1283 g Styrol

112 g Polybutadien(1,2-Vinylgehaltca.9 Gew.%)

1,5 g t-Dodecylmercaptan

1,5 g Octadecyl-3(3′,5′-di-tert.-butyl-4′-hydroxiphenyl)-propionat

1,5 g Dicumylperoxid

bei 110°C Innentemperatur und einer Rührerdrehzahl von 150 Upm bis zu einem Festoffgehalt von 25,4 Gew.% vorpolymerisiert. Anschliessend wurden 1800 ml Wasser, die 9 g Polyvinylpyrrolidon vom K-Wert 90 und 1,8 g $Na_4P_2O_7$ enthielten, zugesetzt und die Rührerdrehzahl auf 300 Upm erhöht. Durch Nachpolymerisation von 3 Stunden bei 110°C, 3 Stunden bei 120°C und 4 Stunden bei 140°C wurde bis zu einem Styrolumsatz > 99% auspolymerisiert.

Durch Mischen dieser beiden Polymerisate wurden die in der Tabelle angegebenen Zusammensetzungen eingestellt.

Die in der Tabelle angegebenen Gewichtsteile schlagfest modifizierten Polystyrol und von Poly(2,6-dimethyl-1,4-phenylen)äther wurden mit jeweils 0,8 Gew.-Teilen Tris(nonylphenyl)phosphit und 1,5 Gew.-Teilen Polyäthylen auf einem 2-Wellen-Extruder bei 280°C geschmolzen, homogenisiert, gemischt und granuliert. Das Poly(2,6-dimethyl-1,4-phenylen)äther hatte eine Grenzviskosität von 0,48 dl/g.

Aus den Mischungen wurden mittels einer Spritzgussmaschine bei 280°C Prüfkörper hergestellt. Diese Prüfkörper wurden für die Dauer von 1 Stunde in Isopropanol gelagert und danach die Spannungsrissbeständigkeit nach DIN 53 449 ermittelt.

Die Ergebnisse sind in der Tabelle zusammengefasst:

Tabelle

| Beispiele | Schlagfestes Polystyrol Gewichtsanteil an Teilchen | | | Anteil in der Mischung (Gew.%) | Poly(2,6-dimethyl-[1]1,4-phenylen)äther Anteil in der Mischung (Gew.%) | Rissgrenzen $U_R$ (μm) | |
|---|---|---|---|---|---|---|---|
| | 5–7 μm | 0,6–3 μm | < 0,6 μm | | | Biege-festigkeit | Reiss-dehnung |
| (erfindungsgemäss) | | | | | | | |
| 1 | 94 | 6 | – | 75 | 25 | >500 | >500 |
| 2 | 90 | 10 | – | 75 | 25 | >500 | >500 |
| Vergleichsversuche (nicht erfindungsgemäss) | | | | | | | |
| A | 97 | 3 | – | 75 | 25 | 130 | 120 |
| B | 80 | 20 | – | 75 | 25 | 130 | 120 |
| C | 80 | 10 | 10 | 75 | 25 | 210 | 200 |

[1] Poly(2,6-dimethyl-1,4)-phenylen)äther mit einer Grenzviskosität von 0,48 dl/g.

## Patentansprüche

1. Thermoplastische Formmassen auf der Grundlage von schlagfest modifizierten Styrolpolymerisaten, deren Weichkomponentengehalt mindestens 20 Gew.-% beträgt, und Polyphenylenäthern, dadurch gekenn-

zeichnet, daß die Formmassen Mischungen aus zwei modifizierten Styrolpolymerisaten enthalten, wobei die Weichkomponente eines Styrolpolymerisates einen mittleren Teilchendurchmesser von 4 bis 10 μm hat und die Teilchen 85 bis 95 Gew.-% der Teilchen der Weichkomponenten der Mischung ausmachen und die Weichkomponente des anderen Styrolpolymerisates einen mittleren Teilchendurchmesser von 0,6 bis 3 μm hat und die Teilchen 5 bis 15 Gew.-% der Teilchen der Weichkomponenten ausmachen.

2. Thermoplastische Formmassen nach Anspruch 1, dadurch gekennzeichnet, dass die Weichkomponente 25 bis 35 Gew.% des schlagfest modifizierten Styrolpolymerisates beträgt.

## Claims

1. A thermoplastic molding composition based on an impact modified styrene polymer whose soft component content is not less than 20% by weight and a polyphenylene ether, containing a mixture of two modified styrene polymers, the soft component of one of the styrene polymers having a median particle diameter of from 4 to 10 μm and the particles accounting for from 85 to 95% by weight of the particles of the soft components of the mixture and the soft component of the other styrene polymer having a median particle diameter of from 0.6 to 3 μm and the particles accounting for from 5 to 15% by weight of the particles of the soft components.

2. A thermoplastic molding composition as claimed in claim 1, wherein the soft component accounts for 25 - 35% by weight of the impact modified styrene polymer.

## Revendications

1. Masses à mouler thermoplastiques à base de polymères de styrènes modifiés pour résister aux chocs, dont la teneur en composants souples s'élève au moins à 20% en poids, et d'éthers de phénylène, caractérisées en ce que ces masses à mouler contiennent des mélanges de deux polymères de styrène modifiés, le composant souple de l'un des polymères de styrène ayant un diamètre moyen de particules de 4 à 10 μm et ses particules constituant de 85 à 95% en poids des particules des composants souples du mélange, et le composant souple de l'autre polymère de styrène ayant un diamètre moyen de particules de 0,6 à 3 μm et ses particules constituant de 5 à 15% en poids des particules des composants souples.

2. Masses à mouler thermoplastiques selon la revendication 1, caractérisées en ce que la teneur en composant souple s'élève à 25 à 35% en poids du polymère de styrène modifié pour résister aux chocs.